# FASCICULE DE BREVET EUROPEEN

(11) **EP 2 697 677 B1**
(45) Date de publication et mention de la délivrance du brevet: **12.08.2020**
(21) Numéro de dépôt: 12724674.2
(22) Date de dépôt: 16.04.2012
(51) Int. Cl.: G02B 27/00, G01J 5/10, H04N 5/33, G01J 5/08, G02B 13/14, G02B 3/08

(54) **SYSTEME D'IMAGERIE COMPRENANT UNE LENTILLE DE FRESNEL**
ABBILDUNGSSYSTEM MIT EINER FRESNELLINSE
IMAGING SYSTEM COMPRISING A FRESNEL LENS

(30) Priorité: 14.04.2011 FR 1153222
(43) Date de publication de la demande: 19.02.2014
(73) Titulaire: Office National d'Etudes et de Recherches Aérospatiales, 91120 Palaiseau (FR); LYNRED, 91120 Palaiseau (FR)
(72) Inventeur: DRUART, Guillaume, 91120 Palaiseau (FR); DE LA BARRIERE, Florence, 93390 Clichy-sous-Bois (FR); CRASTES, Arnaud, 38300 Maubec (FR)
(74) Mandataire: Novagraaf Technologies
(86) Numéro de dépôt international: PCT/FR2012/050832
(87) Numéro de publication internationale: WO 2012/140389

(56) Documents cités:
- US-A- 5 161 057
- US-A1- 2009 225 215

## Description

La présente invention concerne le domaine de la conception de système optique d'imagerie de rayons de champ, ayant de fortes contraintes d'encombrement et de masse. L'invention s'applique notamment à l'imagerie infrarouge (IR), les rayons de champ étant par définition les rayons lumineux provenant d'une scène située à l'infini et passant par le centre de la pupille d'entrée.

Il existe différents systèmes optiques d'imagerie de petites tailles, notamment dans le domaine spectral infrarouge
Il y a deux catégories de systèmes optiques dans ce domaine :
▪ les systèmes non refroidis
▪ les systèmes refroidis.

Pour ces deux catégories, la problématique est de diminuer l'encombrement et la masse de l'optique d'imagerie.
L'état de l'art envisage trois solutions pouvant être combinées :
1. limiter le nombre de lentilles ;
2. utiliser des lentilles plus minces comme des lentilles de Fresnel ou des lentilles multivoie ;
3. utiliser des lentilles fabriquées dans un matériau plus léger.

**Concernant la catégorie des systèmes non refroidis,** la solution généralement retenue est la première : limiter à deux le nombre de lentilles. Concernant plus particulièrement les systèmes d'imagerie non refroidis utilisés dans le domaine spectral infrarouge, noté IR, ce minimum est de deux lentilles et forme le plus souvent une architecture de type Petzval constituée d'une première lentille de focalisation et d'une lentille aplatisseur de champ permettant la correction de la courbure de champ.

Le brevet JP2001/141993A ajoute à cette première solution, consistant à limiter le nombre de lentilles à deux, le remplacement des lentilles classiques par des lentilles minces de Fresnel.
Le brevet US 2007/0002467 A1 ajoute également à ces deux premières solutions, une troisième solution consistant à utiliser des matériaux bas coût comme le polyéthylène qui ne peut être utilisé que dans le cadre des lentilles minces du fait de sa forte absorption. Le brevet américain décrit notamment des détecteurs infrarouges non refroidis de type microbolomètre.
Les principaux inconvénients de ces architectures sont leur faibles résolution des images obtenues, portée optique et sensibilité. Ceci est dû notamment à l'utilisation de lentilles de Fresnel en mode diffractif, mode dans lequel elles ont l'inconvénient d'être très chromatiques.

**Concernant la catégorie des systèmes refroidis,** la demande FR2936878 décrit un système optique d'imagerie comprenant une chambre obscure comportant une brique de détection, une seule lentille pas nécessairement mince et un diaphragme placé en amont de cette lentille. Dans le cas où ladite lentille ne serait pas mince, ce système nécessiterait de refroidir une masse supplémentaire de l'optique par rapport à un système qui n'utiliserait comme unique lentille une lentille mince, or ceci est un inconvénient car cette masse supplémentaire à refroidir conduirait à une augmentation de la durée de mise en froid du système optique.

**Concernant les deux catégories de systèmes,** systèmes refroidis et systèmes non refroidis, une autre solution pour limiter l'épaisseur des lentilles, est le recours à un système multivoie à base de matrice de microlentilles. Cette solution présente l'inconvénient d'avoir des microlentilles à forte flèche, ce qui est difficile à réaliser. La demande de brevet américaine US 2009/0225215 divulgue une lentille hybride comprenant deux faces courbes et un réseau de diffraction gravé sur l'une de ses faces.

Un but de l'invention consiste à obtenir un système optique d'imagerie, refroidi ou non refroidi, utilisable notamment dans le domaine spectral IR, de faible encombrement, tout en limitant les principaux inconvénients des systèmes de l'état de l'art qui sont une forte flèche des microlentilles rendant leur réalisation difficile, ou une épaisseur de lentille les rendant trop absorbantes, ou une masse relativement élevée des lentilles rendant leur refroidissement rapide difficile, ou une qualité d'image dégradée par rapport à celle d'un système optique classique.

### Définitions

Dans ce qui suit, on entend par :
▪ « lentille de Fresnel », une lentille comprenant, sur au moins l'un de ses dioptre, dit « dioptre actif » ou « zone active » de la lame comprenant ladite lentille de Fresnel, un ensemble de discontinuités notamment de transmittance, d'indice de réfraction ou d'épaisseur, dont l'effet est, pour la longueur d'onde de conception, λ₀, de produire une efficacité de diffraction voisine de 100% à un ordre de diffraction p, les phases des rayons de champ transmis au niveau de ces discontinuités étant décalées d'un nombre entier de fois p2π. Un exemple fréquent est celui de discontinuités d'épaisseur, où la lentille se compose de plusieurs surfaces en forme d'anneau concentriques et de courbures équivalentes à une lentille simple réfractive, séparée par des discontinuités d'épaisseur. Il est connu de l'homme du métier qu'une lentille de Fresnel peut être réalisée en matière plastique transparente, comme par exemple du polyéthylène.
▪ « ensemble de détection » : un dispositif comprenant au moins un détecteur. Dans cette invention, il s'agit d'un détecteur optique. L'ensemble de détection est souvent une enceinte à vide comprenant un hublot et un détecteur maintenus fixes par rapport à son axe optique. Ledit hublot peut assurer aussi l'étanchéité de cette enceinte. Dans le cas de systèmes refroidis, cet ensemble de détection peut comprendre une table froide pour refroidir et maintenir le détecteur ainsi qu'un écran froid pour limiter le fond instrumental vu par le détecteur ; il est alors associé à un dispositif de refroidissement ou d'athermalisation.
▪ « dispositif de focalisation », un « dispositif de conjugaison optique » dont la puissance optique est suffisante pour lui permettre de focaliser à lui seul les rayons de champ sur le détecteur.
▪ « dispositif de maintien », un dispositif permettant l'intégration mécanique de différents éléments du système optique d'imagerie. Ce dispositif de maintien peut être étanchéifié par un hublot.
▪ « amont » et « aval » les désignations permettant de situer les différents éléments les uns par rapport aux autres le long d'un axe optique orienté selon le sens de propagation de la lumière, soit du diaphragme, en amont, vers l'ensemble de détection, en aval. « Un élément 1 est en amont d'un élément 2 » signifiera donc que l'élément 1 est situé avant l'élément 2 dans le sens de propagation des rayons de champs, et réciproquement pour l'aval.

L'invention concerne un système d'imagerie de rayons de champs provenant d'un point quelconque d'une scène observée, tel que défini dans la revendication 1. Des modes de réalisation additionnels sont définis dans les revendications dépendantes.

Le système d'imagerie présente les deux résultats avantageux d'avoir :
▪ une bande spectrale plus large que celle des systèmes d'imagerie qui utiliseraient un dispositif de focalisation comprenant une lentille de Fresnel classique ; et
▪ la masse de son dispositif de focalisation qui est inférieure à celle des systèmes d'imagerie dont le dispositif de focalisation utilise une lentille réfractive.
Il est précisé que le calcul des distances d_{I}, L₄, d_{d} peut être réalisé à l'aide d'un logiciel optique de tracé de rayons tel ZEMAX, Code V ou OSLO et que le calcul de la distance dl peut aussi être réalisé par les coefficients de Zenike ou de Seidel.

Dans cette invention, l'utilisation d'un faible nombre de lentilles plates, voire l'utilisation d'une seule lentille de Fresnel, permet de réduire l'encombrement du système d'imagerie tout en garantissant une bonne qualité image notamment par le codage de la puissance optique sur un seul dioptre, plus précisément sur sa zone active. Ce dernier est notamment utilisé pour focaliser les rayons de champ sur la surface de détection du détecteur optique. Ce système présente en effet l'avantage d'être très compact, par rapport à des architectures selon l'état de la technique, tout en ayant une bonne qualité optique sur un champ de visualisation très grand.

Le système d'imagerie peut être intégré dans une camera bas coût pour des applications domotiques et utilisant une lentille de Fresnel.

Un autre avantage est de faciliter la fabrication du système d'imagerie puisque le polissage d'un seul dioptre d'une seule lame suffit à produire le dispositif de focalisation, alors qu'habituellement c'est un ménisque qui est utilisé, dont la fabrication et l'intégration sont plus délicates.

L'utilisation d'une lentille de Fresnel dont les discontinuités sont des discontinuités d'épaisseur, permet de diminuer la masse du système d'imagerie de l'invention tout en conservant une bonne résolution de l'image formée sur le détecteur optique.

Différentes configurations permettent d'optimiser les corrections d'aberrations optiques de différentes natures, notamment, la position du diaphragme et la correction de la zone active peuvent être déterminées de manière à minimiser :
- les aberrations de champ telles l'astigmatisme, la coma et la courbure de champ ;
- l'aberration sphérique ;
- la distorsion.

Dans cette invention, la distance entre le diaphragme et la zone active du premier dioptre de la lentille de Fresnel et le diamètre de la pupille d'entrée, inférieur au diamètre de la zone active, sont déterminés de manière à ce que la configuration permette aux rayons incidents de venir illuminer une partie de la surface de la zone active du premier dioptre et d'utiliser ainsi les corrections locales des rayons de champ par cette zone active pour former une meilleure image dans le plan focal, ce dernier étant situé dans le plan comprenant la surface photosensible du détecteur optique.

L'utilisation d'une lentille de Fresnel corrigeant localement les rayons de champs, permet en outre d'utiliser un système d'imagerie comportant une unique lentille.

La surface de la zone active du premier dioptre de la lentille de Fresnel est calculée pour corriger les aberrations optiques spécifiques à chaque champ d'observation. Notamment, une correction est réalisée au niveau de chacun des éléments de surface de la zone active. Les aberrations optiques spécifiques à chaque champ du système sont ainsi corrigées.

La zone active de la lentille de Fresnel peut être asphérisée. L'architecture du système d'imagerie peut être optimisée par un logiciel de conception optique permettant de traiter la courbure, la conicité, l'asphéricité, l'épaisseur de toute lentille ainsi que la position du diaphragme et du plan focal.

De façon avantageuse, ledit dioptre actif est conçu à l'ordre p pour la longueur d'onde de conception, l'ordre p étant supérieur à 10.

De façon avantageuse, le dispositif de focalisation du système d'imagerie comprend, en série, plusieurs lames comprenant chacune une ou plusieurs lentilles de Fresnel.
Un avantage de l'utilisation d'une ou de plusieurs lentilles de Fresnel est de permettre de réduire la puissance focale de chaque lentille et donc de réduire les profondeurs de gravure ou d'augmenter la dimension des zones de Fresnel qui devient problématique dans le cas de microlentilles plastiques (par exemple en polyéthylène).

De façon avantageuse, le détecteur fait partie d'un ensemble de détection optique qui est une enceinte à vide ouverte optiquement par un hublot qui assure par ailleurs l'étanchéité de ladite enceinte, ledit hublot et ledit détecteur étant maintenus fixes l'un par rapport à l'autre, leur axe optique respectif étant confondus.

De façon avantageuse, le détecteur peut détecter les rayons de champ dans le domaine spectral Infrarouge, ledit détecteur étant préférentiellement un microbolomètre dans le cas où ledit système d'imagerie est non refroidi.
Pour un microbolomètre, il est nécessaire d'avoir une grande ouverture pour augmenter le flux lumineux entrant mais ceci diminue la profondeur de champ.
Pour le cas de l'IR refroidi, l'ouverture peut être plus petite.
Le système d'imagerie peut être intégré dans une camera infrarouge refroidie qui utilise un filtre froid imageant.

Un avantage de l'utilisation du système d'imagerie dans le domaine infrarouge est que des matériaux peu dispersifs et ayant un indice supérieur à ce que l'on trouve habituellement dans le domaine visible peuvent être utilisés. Par exemple des matériaux tels que le Germanium, le Silicium, ou encore les verres chalcogénides et les sulfures de zinc (Zns) ou de selénium (ZnSe), peuvent être utilisés. Ces matériaux permettent de minimiser les effets de dispersion et permettent de corriger efficacement les aberrations optiques avec peu d'éléments optiques.
Un avantage d'une utilisation dans le domaine de l'infrarouge refroidi est que la masse du système est diminuée grâce notamment à la lentille de Fresnel. Cette solution favorise une descente en température plus rapide que les systèmes actuels.
Le système d'imagerie de l'invention permet d'obtenir une bonne qualité d'image, notamment dans le domaine spectral de l'Infrarouge tout en minimisant les coûts de fabrication notamment par l'utilisation d'une unique lame.
En particulier, la diminution des coûts de fabrication du système d'imagerie de l'invention est avantageusement obtenue par :
- un procédé de fabrication compatible avec processus de fabrication wafer Silicium ou un processus de moulage (matériaux Chalcogénide ou polyéthylène) ;
- l'utilisation d'une unique lentille ;
- l'utilisation d'un seul dioptre usiné ;
la compatibilité avec l'utilisation de matériaux bas coûts comme par exemple le polyéthylène.

De façon avantageuse, un filtre est disposé entre le diaphragme et le détecteur, ledit filtre pouvant être intégré dans la lame comprenant ladite lentille de Fresnel.

De façon avantageuse, le système d'imagerie comprend un dispositif de maintien de l'ensemble de ses éléments optiques, comprenant un écran entourant et maintenant lesdits éléments et dont l'ouverture est ledit diaphragme, ledit écran étant étanchéifié par un hublot pouvant avoir une fonction de mise en forme des rayons de champ, notamment une fonction de mise en forme équivalente à celle d'une lame de Schmidt. Dans le cas de l'utilisation d'un écran froid, ce cas le hublot n'est pas intégré sur l'écran froid.
Cet ensemble de maintien peut être utilisé, à l'image de la chambre obscure des objectifs photo, pour bloquer les rayons de la scène se trouvant en dehors du champ d'observation du système.
Selon un mode de réalisation, l'ensemble de maintien peut comporter un système de baffles pour limiter les réflexions des rayons de champ.

De façon avantageuse, le système d'imagerie comprend un dispositif de refroidissement ou d'athermalisation des éléments optiques dudit système d'imagerie, ledit dispositif, pouvant être un cryostat, étant ouvert optiquement par un hublot assurant également son étanchéité, et contenant ledit écran sans son hublot.
L'écran froid est utilisé pour limiter le fond instrumental vu par le détecteur. Dans le domaine de l'optique refroidi, dans le cas de l'utilisation d'un cryostat, le système d'imagerie de l'invention peut avantageusement comporter une optique réalisant elle-même la fonction de filtre froid. Cette solution permet alors de donner une fonction d'imagerie au cryostat sans intégrer la moindre optique supplémentaire.
Enfin, le système de l'invention permet une adaptation simple du domaine de l'optique refroidie à celui de l'optique non refroidie et réciproquement.

De façon avantageuse, l'un des dioptres de la lentille de Fresnel, de préférence le dioptre situé en amont du dioptre, dit dioptre actif, de cette lentille comprenant lesdites discontinuités afin de réduire l'incidence desdits rayons de champ et limiter ainsi les effets d'ombrage sur le dioptre actif, est recouvert partiellement d'une couche opaque de sorte à assurer la fonction dudit diaphragme.
Ces ombrages sont dus aux discontinuités sur le premier dioptre.
Dans ce mode de réalisation, les courbures des premier et deuxième dioptres peuvent être de sorte à optimiser la limitation des effets d'ombrage en permettant que les rayons de champs soient alors déviés au niveau de l'interface entre l'air et le matériau de la lame comportant ladite lentille de Fresnel.

De façon avantageuse, le système d'imagerie est un système d'imagerie multivoies caractérisé en ce que ledit diaphragme comprend une pluralité de parties transparentes, ladite lentille de Fresnel étant située sur une lame comprenant une pluralité de lentilles de Fresnel, formant une pluralité de voies optiques conjuguées chacune à une surface de détection, chacune des voies optiques comprenant un dispositif de limitation de champ permettant d'isoler optiquement les différentes voies.

Le système d'imagerie peut être découplé de manière à former un système multivoie ultra-compact intégré au niveau du détecteur et utilisant une matrice de lentilles de Fresnel.

Dans le cas d'une application multivoies, le diaphragme peut comprendre plusieurs parties transparentes, éventuellement différentes. La lame peut comprendre plusieurs lentilles de Fresnel, éventuellement différentes, de sorte à avoir une pluralité de voies optiques associées chacune à une surface de détection. Le système d'imagerie peut alors comprendre un filtre par voie optique et un dispositif de limitation de champ de chacune des voies optiques.

De façon avantageuse, l'agencement des éléments du système d'imagerie multivoies, permet de former et de combiner des imagettes, un dispositif de traitement d'image permettant l'exploitation des imagettes de manière à augmenter la résolution de l'image en sortie du système d'imagerie.

De façon avantageuse, le système d'imagerie multivoies comprend des dispositifs de filtrage fonctionnent dans des bandes spectrales différentes de manière à réaliser une fonction de caméra multispectrale. Dans ce mode de réalisation multivoie, un filtre est associé à chaque voie, chaque filtre ayant des propriétés spectrales différentes, de manière à avoir une fonction de caméra multi spectrale.

De façon avantageuse, le système d'imagerie multivoies comprend des voies optiques visant des directions optiques différentes, et un dispositif de traitement d'image apte à exploiter des imagettes, de manière à augmenter l'angle de champ d'observation dudit système d'imagerie.
On entend par « imagette » une image produite par une des voies optiques. L'agencement des éléments du système d'imagerie multivoies, permet de former et de combiner des imagettes. La combinaison des imagettes permet à l'aide d'un dispositif de traitement d'image d'exploiter les imagettes de manière à augmenter la résolution de l'image en sortie du système d'imagerie.

De façon avantageuse, le système d'imagerie multivoies est tel que des dispositifs de filtrage fonctionnent dans des bandes spectrales différentes de manière à réaliser une fonction de caméra multispectrale.

De façon avantageuse, le système d'imagerie multivoies est tel que des voies optiques visent des directions optiques différentes, et il comprend un dispositif de traitement d'image apte à exploiter des imagettes, de manière à augmenter l'angle de champ d'observation dudit système d'imagerie.

De façon avantageuse, la fréquence de coupure du système d'imagerie est supérieure à la fréquence de Nyquist égale à l'inverse du double du pas d'échantillonnage du détecteur.

Le système d'imagerie de l'invention permet d'obtenir une fréquence de coupure supérieure à la fréquence de Nyquist. La fréquence de coupure est également adaptée au pas d'échantillonnage de l'ensemble de détection. Ce choix permet d'obtenir bonne qualité d'image, notamment une résolution fine.

L'invention concerne également un procédé d'imagerie comme défini dans la revendication 16.

Le procédé d'imagerie présente les deux résultats avantageux:
▪ d'avoir une bande spectrale plus large que celle des procédés d'imagerie qui utiliseraient un dispositif de focalisation comprenant une lentille de Fresnel classique ; et
▪ de pouvoir être mis en œuvre par un système d'imagerie ayant la masse de son dispositif de focalisation qui est inférieure à celle des systèmes d'imagerie dont le dispositif de focalisation utilise une lentille réfractive.

Le calcul des distances d_{I}, L₄, d_{d} peut être réalisé à l'aide d'un logiciel optique tel ZEMAX, Code V ou OSLO. Le calcul de la distance dI peut aussi être réalisé par les coefficients de Zenike ou de Seidel. De façon particulièrement avantageuse, l'ordre p est supérieur à 10.

### FIGURES

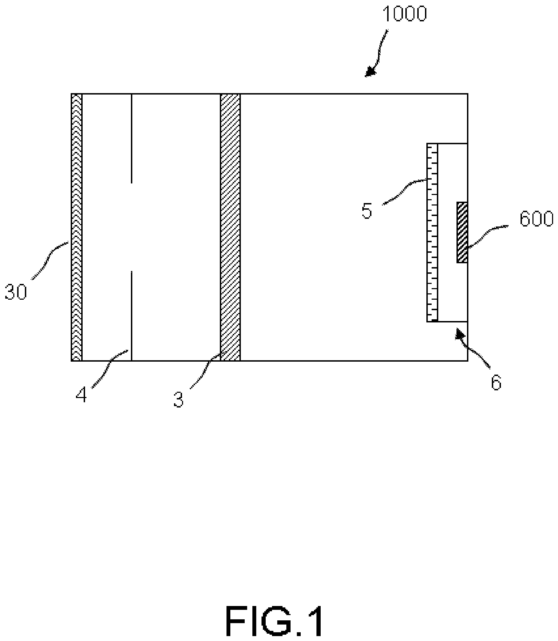

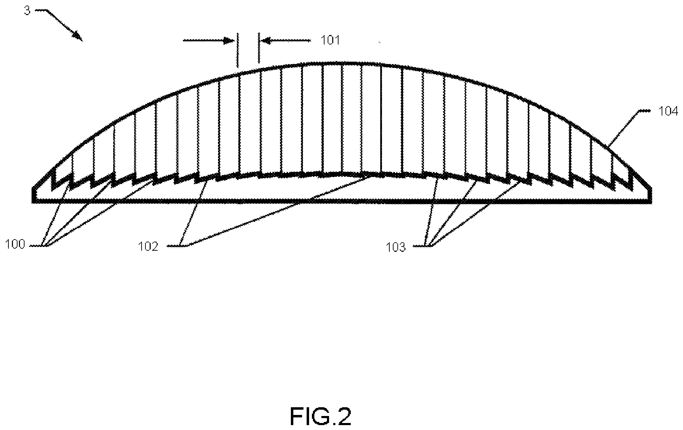

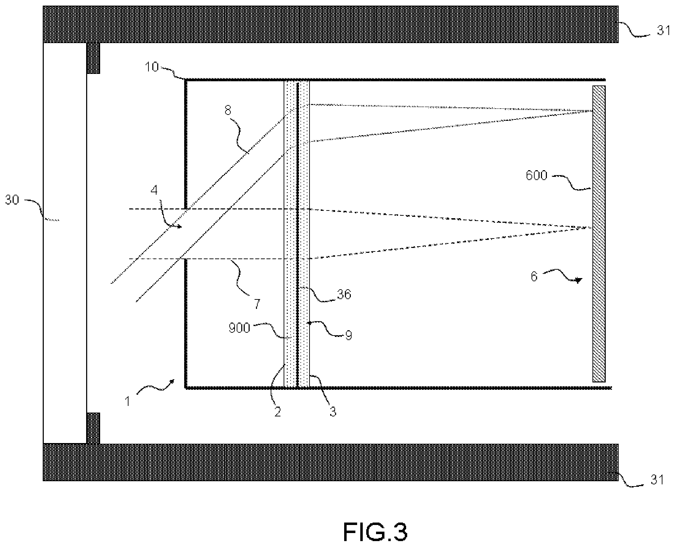

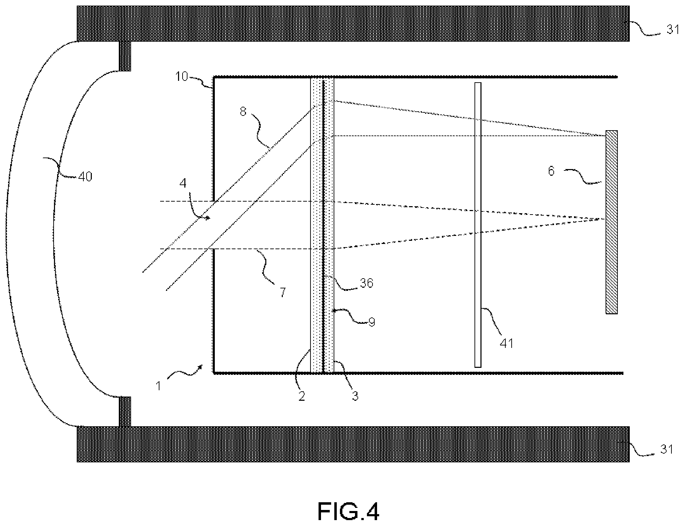

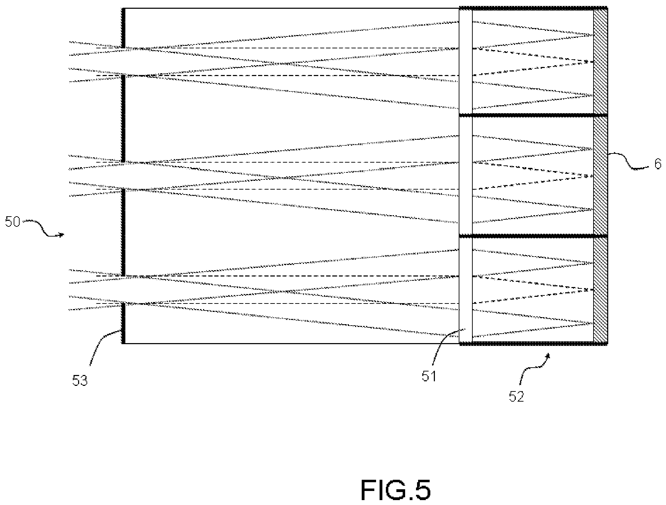

Les figures visées ci-dessous illustrent des exemples de réalisation, mais d'autres réalisations sont bien entendu possibles.
▪ figure 1 : un système d'imagerie selon un mode de réalisation de l'invention comprenant une lentille de Fresnel ;
▪ figure 2 : une architecture connue d'une lentille de Fresnel ;
▪ figure 3 : un système d'imagerie selon un mode de réalisation de l'invention comprenant un dispositif de refroidissement ;
▪ figure 4 : un système d'imagerie selon un mode de réalisation de l'invention comprenant une lentille de compression de champ ;
▪ figure 5 : un système optique multivoie selon un mode de réalisation de l'invention.

La figure 1 représente un système d'imagerie 1 de rayons de champs selon un mode de réalisation de l'invention comprenant un dispositif de maintien des éléments du système d'imagerie. Ce dispositif de maintien est également utilisé, à l'image de la chambre obscure des objectifs photo, pour bloquer les rayons de la scène se trouvant en dehors du champ d'observation du système.
Physiquement, le diaphragme peut être représenté par une plaque dans lequel un trou a été usiné. Ce diaphragme joue alors le rôle de pupille d'entrée du système.
En outre, une lentille supplémentaire peut être placée devant le diaphragme de manière à orienter les rayons de champ pour maximaliser les performances d'imagerie du système de l'invention.

La figure 2 représente une vue de coupe d'une lentille de Fresnel 3 comportant une pluralité de zones 104 de Fresnel. Chaque zone correspond à une découpe circulaire de la lentille sur une largeur 101. La lentille forme alors des anneaux concentriques. La surface globale de la lentille n'est plus lisse mais se compose de plusieurs surfaces adjacentes 100 ou 102 ou 103 de même courbure, séparées par des discontinuités entre les surfaces, notamment entre les surfaces 100 et 102 et les surfaces 102 et 103.

La lentille de Fresnel 3, représentée sur la figure 2, code la phase de la lentille à une constante additive près valant m.2 π à la longueur d'onde λ₀, où m est l'ordre de diffraction centré sur λ₀. L'utilisation de la lentille de Fresnel à un ordre m élevé permet de limiter les aberrations chromatiques de la lentille en mode diffractif, mais aussi de diminuer le nombre de discontinuité, favorisant alors le mode réfractif dans la configuration présentée. Dans un mode de réalisation privilégié, la lentille de Fresnel fonctionnera à un ordre m élevé.

La variation de phase peut être codée de différentes manières, notamment par :
- une variation d'épaisseur, la lentille étant usinée de manière à retirer des blocs de matière de hauteur m·λ₀/ (n-no), où n est l'indice du matériau de ladite lentille et no est l'indice du milieu environnant qui vaut généralement 1 (indice de l'air).
- Un gradient d'indice, en faisant soit varier l'indice du matériau ou en faisant varier les matériaux, ou en faisant varier la composition des matériaux ou en gravant la lentille d'un ensemble de structures de sublongueur d'ondes donnant à la lumière traversant ces structures l'illusion de voir des matériaux d'indice différent.

Lorsque la variation de phase est codée par des variations d'épaisseurs, un profil continu est obtenu par usinage diamant.

Des profils multi-niveaux ou binaires peuvent être obtenus par photolithographie.

Enfin l'optique peut être moulée ou pressée.

La structuration de la lame peut être obtenue par des motifs sublongueurs d'ondes. Ces structures peuvent être fabriquées par une méthode de photolithographie ou de nanoimprint.

La figure 3 représente un mode de réalisation où le diaphragme est positionné au niveau d'une paroi de l'écran froid, car cela permet, d'une part, de faire contenir le système entier dans l'écran froid, le système optique et sa pupille froide étant eux aussi refroidis et, d'autre part, de minimiser les dimensions du système optique au strict minimum.

Dans ce mode de réalisation représenté à la figure 3, l'ensemble de maintien comprend un cryostat 31. Le cryostat comprend un premier hublot 30 et au moins un détecteur optique froid 600. Dans cette configuration, le détecteur froid 600 peut être maintenu sur une table froide et entouré d'au moins un écran froid 10. La table froide permet de refroidir le détecteur. L'écran froid 10 est alors disposé de manière à entourer le détecteur optique, un filtre froid et le dispositif de focalisation.

La lentille de Fresnel et le filtre froid peuvent être fusionnés. La lame alors a une double fonction. Une première fonction optique est une fonction de focalisation des rayons de champs. Une seconde fonction est une fonction de filtre froid 36. Lorsque la lame assure la fonction de filtre froid, cette dernière fonction peut être obtenue par un traitement passe bande de la lame.

La figure 4 représente un mode de réalisation où le hublot 30 peut être remplacé par une lentille 40 ayant une fonction de hublot.

Dans cette dernière variante, le hublot peut être également une lame de Schmidt permettant de mettre en forme les rayons de champ. En outre le hublot peut remplir une fonction de filtrage.

Dans une autre variante de réalisation, une partie transparente du diaphragme est apte à mettre en forme des rayons de champ d'une manière équivalente à une lame de Schmidt.

Le détecteur optique peut être un détecteur quantique refroidi placé dans le plan focal du système optique.

En outre, le système d'imagerie peut comporter un filtre froid 41 supplémentaire disposé n'importe où sur le trajet optique.

La figure 5 représente un système d'imagerie multivoies 50 comprenant une matrice de diaphragmes segmentés 4. Un dispositif de focalisation 21 est monté en parallèle de manière à former différentes images sur une pluralité de surface de détection d'un détecteur optique 600.

Une matrice de muret 52 est représentée comme exemple de dispositif de limitation de champ entre les voies.

Dans ce mode de réalisation, les lentilles de Fresnel peuvent être configurées de manière à ce que la longueur focale soit supérieure à celle d'une unique lentille de Fresnel d'un système d'imagerie équivalent. Dans ce dernier cas, ce mode de réalisation permet de diminuer les contraintes du dispositif de focalisation et d'apporter de meilleures corrections d'aberrations optiques. Elle peut être utilisée lorsqu'il est nécessaire d'avoir un système optique ouvert ou s'il est nécessaire de mieux corriger les aberrations optiques du système d'imagerie. Dans ce mode de réalisation, préférentiellement, les orientations des lentilles de Fresnel sont identiques.

Chacune des lentilles peut avoir une fonction spécifique.

Lorsque chaque lentille est associée à une surface de détection différente, le système est dit de sorte à avoir une pluralité de voies optiques associées chacune à une surface de détection. Le système peut comprendre un filtre par voie optique et un dispositif de limitation de champ de chacune des voies optiques.

Il est possible de réaliser plusieurs lentilles de Fresnel, éventuellement configurées de différentes manières, sur une unique lame. Le dispositif d'imagerie de l'invention comprend une pluralité de voies. On parle alors de système d'imagerie multivoies. (on peut intégrer une fonction prisme différente aux lentilles de Fresnel de manière à ce quelles observent différentes zones de la scène).

Le système d'imagerie de l'invention peut être périodisé pour permettre une utilisation d'une architecture de type TOMBO permettant une combinaison d'imagettes pour avoir une meilleure résolution. Un système TOMBO est un système multivoie dont chacune des voies visualisent le même champ optique.

Pour une utilisation dans le domaine spectral infra-rouge, il serait avantageux d'utiliser une pluralité d'écrans froids configurés pour entourer chaque élément optique dudit système.
Le diaphragme peut comprendre plusieurs parties transparentes, éventuellement différentes.
Chaque partie transparente du diaphragme peut être placée à une distance de la zone active associée, voisine de la longueur focale dudit système, de manière à avoir un système d'imagerie télécentrique. Les rayons de champ arrivent alors perpendiculairement sur la surface du détecteur. Si un filtre est placé entre l'optique et le détecteur, les rayons de champ voient donc le filtre sous la même couleur.

## Revendications

1. Système d'imagerie (1) de rayons de champs (7, 8) provenant d'un point quelconque d'une scène observée, comprenant :
- un détecteur (600) ;
- un diaphragme (4) placé en amont du détecteur et situé à une distance d₀ du point quelconque de la scène observée ; et
- un dispositif de focalisation (9), des rayons de champ sur le détecteur, le dispositif de focalisation comprenant un dioptre actif comprenant un ensemble de discontinuités d'indice de réfraction ou d'épaisseur, dont l'effet est, pour la longueur de conception λ₀, de produire une efficacité de diffraction voisine de 100% à un ordre de diffraction p, les phases des rayons de champ transmis au niveau de ces discontinuités étant décalées d'un nombre entier de fois p2π, le dispositif de focalisation étant de longueur d'onde de conception λ₀ comprise dans la bande spectrale de la scène observée, le dioptre actif du dispositif de focalisation étant placé entre le diaphragme (4) et le détecteur (600) :
∘ à une distance d_{I} du diaphragme minimisant l'aberration d'astigmatisme au niveau du détecteur ;
∘ à une distance d_{d} du détecteur, la distance d_{d}, fonction de la distance d₀, étant la distance focale dudit dioptre actif;
le système d'imagerie étant **caractérisé en ce que** :
▪ le dispositif de focalisation (9) comprend une lame (900) comprenant au moins un dioptre de Fresnel qui est le dioptre actif du dispositif de focalisation et qui porte l'essentiel de la puissance optique dudit dispositif de focalisation, cette puissance optique étant fournie par les zones de continuité de phase dudit dioptre actif, ladite puissance optique étant adaptée pour focaliser les rayons de champ sur le détecteur,
▪ ledit dioptre actif est conçu à l'ordre p pour la longueur d'onde de conception, l'ordre p étant supérieur ou égale à trois;
▪ l'ouverture L_{d} du diaphragme, placé en amont du dioptre actif, est inférieure à L_{dmax} = L₄. d₀ / (d₀ + d_{I}), où L₄ est la plus petite distance entre quatre discontinuités consécutives de la lentille de Fresnel, afin d'une part, de limiter à trois le nombre maximum de zones de discontinuité de phase éclairées par lesdits rayons de champ d'un angle d'incidence donné et d'autre part, de permettre une correction locale d'aberrations, adaptée aux angles d'incidence desdits rayons de champ ;
• ledit dioptre actif est conçu pour effectuer ladite correction locale d'aberrations.

2. Système d'imagerie (1) selon la revendication 1, **caractérisé en ce que** ledit dioptre actif est conçu à l'ordre p pour la longueur d'onde de conception, l'ordre p étant supérieur à 10.

3. Système d'imagerie (1) selon l'une quelconque des revendications précédentes, **caractérisé en ce que** le dispositif de focalisation (9) comprend, en série, plusieurs lames comprenant chacune une ou plusieurs lentilles de Fresnel.

4. Système d'imagerie (1) selon l'une quelconque des revendications précédentes, **caractérisé en ce que** le détecteur (600) fait partie d'un ensemble de détection optique (6) qui est une enceinte à vide ouverte optiquement par un hublot (5) qui assure par ailleurs l'étanchéité de l'enceinte, le hublot et le détecteur (600) étant maintenus fixes l'un par rapport à l'autre, leur axe optique respectif étant confondus.

5. Système d'imagerie (1) selon l'une quelconque des revendications précédentes, **caractérisé en ce que** le détecteur (600) peut détecter les rayons de champ dans le domaine spectral Infrarouge.

6. Système d'imagerie (1) selon la revendication 5, **caractérisé en ce que** le détecteur (600) est un microbolomètre dans le cas où le système d'imagerie est non refroidi.

7. Système d'imagerie (1) selon l'une quelconque des revendications précédentes, **caractérisé en ce qu'**un filtre (41) est disposé entre le diaphragme et le détecteur (600), ledit filtre (36) pouvant être intégré dans la lame (900) comprenant ladite lentille de Fresnel.

8. Système d'imagerie (1) selon l'une quelconque des revendications précédentes, **caractérisé en ce qu'**il comprend un dispositif de maintien (1000) de l'ensemble de ses éléments optiques, comprenant un écran entourant et maintenant lesdits éléments et dont l'ouverture est ledit diaphragme (4), ledit écran étant étanchéifié par un hublot (40) pouvant avoir une fonction de mise en forme des rayons de champ, notamment une fonction de mise en forme équivalente à celle d'une lame de Schmidt

9. Système d'imagerie (1) selon la revendication 8, **caractérisé en ce qu'**il comprend un dispositif de refroidissement ou d'athermalisation (31) des éléments optiques dudit système d'imagerie, ledit dispositif, pouvant être un cryostat, étant ouvert optiquement par un hublot assurant également son étanchéité, et contenant ledit écran sans son hublot.

10. Système d'imagerie (1) selon l'une quelconque des revendications précédentes, **caractérisé en ce que** l'un des dioptres de ladite lentille de Fresnel, de préférence le dioptre situé en amont du dioptre, dit dioptre actif, de cette lentille comprenant lesdites discontinuités afin de réduire l'incidence desdits rayons de champ et limiter ainsi les effets d'ombrage sur le dioptre actif, est recouvert partiellement d'une couche opaque de sorte à assurer la fonction dudit diaphragme (4).

11. Système d'imagerie multivoies (50), selon l'une quelconque des revendications précédentes, **caractérisé en ce que** ledit diaphragme (4) comprend une pluralité de parties transparentes, ladite lentille de Fresnel étant située sur une lame (900) comprenant une pluralité de lentilles de Fresnel, formant une pluralité de voies optiques conjuguées chacune à une surface de détection (6), chacune des voies optiques comprenant un dispositif de limitation de champ permettant d'isoler optiquement les différentes voies.

12. Système d'imagerie multivoies (50), selon la revendication 11, **caractérisé en ce que** l'agencement des éléments dudit système, permet de former et de combiner des imagettes, un dispositif de traitement d'image permettant l'exploitation des imagettes de manière à augmenter la résolution de l'image en sortie du système d'imagerie.

13. Système d'imagerie multivoies (50), selon l'une des revendications 11 ou 12, caractérisé en des dispositifs de filtrage fonctionnent dans des bandes spectrales différentes de manière à réaliser une fonction de caméra multispectrale.

14. Système d'imagerie multivoies (50), selon l'une des revendications 11, 12 ou 13, **caractérisé en ce que** des voies optiques visent des directions optiques différentes, et **en ce qu'**il comprend un dispositif de traitement d'image apte à exploiter des imagettes, de manière à augmenter l'angle de champ d'observation dudit système d'imagerie.

15. Système d'imagerie selon l'une quelconque des revendications précédentes, **caractérisé en ce que** la fréquence de coupure du système d'imagerie est supérieure à la fréquence de Nyquist égale à l'inverse du double du pas d'échantillonnage du détecteur.

16. Procédé d'imagerie sur un détecteur (600) à l'aide d'un dispositif de focalisation (9) comprenant une lame (900) comprenant au moins un dioptre de Fresnel qui est le dioptre actif du dispositif de focalisation de longueur d'onde de conception λ₀ comprise dans la bande spectrale d'une scène observée, le dispositif de focalisation (9) étant placé en aval d'un diaphragme, des rayons de champ (7, 8) provenant d'un point quelconque d'une scène observée distant d'une distance d₀ du diaphragme, le dioptre actif comprenant un ensemble de discontinuités de réfraction ou d'épaisseur, dont l'effet est, pour la longueur de conception λ₀, de produire une efficacité de diffraction voisine de 100% à un ordre de diffraction p, les phases des rayons de champ transmis au niveau de ces discontinuités étant décalées d'un nombre entier de fois p2π, le procédé d'imagerie comprenant les étapes suivantes :
• calcul de la distance d_{I} entre le diaphragme et le dioptre actif du dispositif de focalisation permettant de minimiser l'aberration d'astigmatisme au niveau du détecteur;
**caractérisé en ce qu'**il comprend les étapes additionnelles suivantes :
▪ choix d'une puissance optique du dioptre actif de la lentille de Fresnel, ledit dioptre actif portant l'essentiel de la puissance optique dudit dispositif de focalisation, cette puissance optique étant fournie par les zones de continuité de phase dudit dioptre actif, ladite puissance optique étant adaptée pour focaliser les rayons de champ sur le détecteur ;
▪ focaliser les rayons de champ sur le détecteur, au moyen dudit dioptre actif conçu à l'ordre p pour la longueur d'onde de conception, ledit ordre p étant supérieur ou égale à trois ;
▪ calcul de la plus petite distance L₄ entre quatre discontinuités consécutives de la lentille de Fresnel, et de la distance d_{d} entre le dispositif de focalisation et le détecteur, la distance d_{d}, fonction de la distance d₀, étant la distance focale dudit dioptre actif;
▪ diminuer si nécessaire l'ouverture L_{d} du diaphragme placé en amont du dioptre actif, de sorte à ce qu'elle soit inférieure à L_{dmax} = L₄. d₀ / (d₀ + d_{I}), afin d'une part, de limiter à trois le nombre maximum de zones de discontinuité de phase éclairées par lesdits rayons de champ d'un angle d'incidence donné et d'autre part, de permettre une correction locale d'aberrations, adaptée aux angles d'incidence desdits rayons de champ ;
▪ ledit dioptre actif est conçu pour effectuer ladite correction locale d'aberrations.

## Patentansprüche

1. Abbildungssystem (1) von Feldstrahlen (7, 8), die von einem beliebigen Punkt einer beobachteten Szene stammen, umfassend:
- einen Detektor (600);
- eine Blende (4), die dem Detektor vorgelagert ist und sich in einer Distanz d₀ von dem beliebigen Punkt der beobachteten Szene befindet; und
- eine Fokussiervorrichtung (9) für die Feldstrahlen auf dem Detektor, wobei die Fokussiervorrichtung ein aktives Diopter umfasst, das eine Einheit von Diskontinuitäten umfasst, mit einer Brechzahl oder einem Dickenindex, deren Wirkung es ist, für die Konstruktionslänge λ₀ eine Beugungseffizienz von etwa 100 % bei einer Beugungsordnung p zu erzeugen, wobei die Phasen der Feldstrahlen, die auf Höhe dieser Diskontinuitäten ausgesendet werden, um eine ganze Zahl von Malen p2n versetzt sind, wobei die Fokussiervorrichtung eine Konstruktionswellenlänge λ₀ aufweist, die in dem Spektralband der beobachteten Szene umfasst ist, wobei das aktive Diopter der Fokussiervorrichtung zwischen der Blende (4) und dem Detektor (600) platziert ist:
o in einer Distanz d_{I} von der Blende, wodurch die Astigmatismus-Aberration auf Höhe des Detektors minimiert wird;
o in einer Distanz d_{d} von dem Detektor, wobei die Distanz d_{d}, abhängig von der Distanz d₀, die Brennweite des aktiven Diopters ist;
wobei das Abbildungssystem **dadurch gekennzeichnet ist, dass**
▪ die Fokussiervorrichtung (9) eine Platte (900) umfasst, die mindestens ein Fresnel-Diopter umfasst, welches das aktive Diopter der Fokussiervorrichtung ist und welches den Großteil der optischen Leistung der Fokussiervorrichtung trägt, wobei diese optische Leistung von den Phasenkontinuitätszonen des aktiven Diopters geliefert wird, wobei die optische Leistung angepasst ist, um die Feldstrahlen auf dem Detektor zu fokussieren,
▪ das aktive Diopter mit der Ordnung p für die Konstruktionswellenlänge konzipiert ist, wobei die Ordnung p größer oder gleich drei ist;
▪ die Öffnung L_{d} der Blende, die dem aktiven Diopter vorgelagert ist, kleiner ist als L_{dmax} = L₄.d₀/(d₀ + d_{I}),wobei L₄ die kürzeste Distanz ist zwischen vier aufeinanderfolgenden Diskontinuitäten der Fresnel-Linse, um einerseits die maximale Anzahl von Phasendiskontinuitätszonen, die von den Feldstrahlen mit einem gegebenen Einfallswinkel beleuchtet werden, auf drei zu begrenzen, und andererseits eine lokale Korrektur von Aberrationen zu ermöglichen, angepasst an die Einfallswinkel der Feldstrahlen;
▪ das aktive Diopter konzipiert ist, um die lokale Korrektur von Aberrationen auszuführen.

2. Abbildungssystem (1) nach Anspruch 1, **dadurch gekennzeichnet, dass** das aktive Diopter mit der Ordnung p für die Konstruktionswellenlänge konzipiert ist, wobei die Ordnung p größer als 10 ist.

3. Abbildungssystem (1) nach einem der vorstehenden Ansprüche, **dadurch gekennzeichnet, dass** die Fokussiervorrichtung (9) mehrere Platten in Reihe umfasst, die jeweils eine oder mehrere Fresnel-Linsen umfassen.

4. Abbildungssystem (1) nach einem der vorstehenden Ansprüche, **dadurch gekennzeichnet, dass** der Detektor (600) zu einer optischen Detektionseinheit (6) gehört, die eine Vakuumkammer ist, die durch ein Sichtfenster (5) optisch geöffnet ist, welches darüber hinaus die Dichtheit der Kammer sicherstellt, wobei das Sichtfenster und der Detektor (600) zueinander fest gehalten werden, wobei ihre jeweiligen optischen Achsen zusammenfallen.

5. Abbildungssystem (1) nach einem der vorstehenden Ansprüche, **dadurch gekennzeichnet, dass** der Detektor (600) Feldstrahlen im Infrarot-Spektralbereich detektieren kann.

6. Abbildungssystem (1) nach Anspruch 5, **dadurch gekennzeichnet, dass** der Detektor (600) ein Mikrobolometer ist, für den Fall, dass das Abbildungssystem ungekühlt ist.

7. Abbildungssystem (1) nach einem der vorstehenden Ansprüche, **dadurch gekennzeichnet, dass** ein Filter (41) zwischen der Blende und dem Detektor (600) angeordnet ist, wobei der Filter (36) in die Platte (900), welche die Fresnel-Linse umfasst, integriert werden kann.

8. Abbildungssystem (1) nach einem der vorstehenden Ansprüche, **dadurch gekennzeichnet, dass** es eine Haltevorrichtung (1000) für die Gesamtheit seiner optischen Elemente umfasst, umfassend eine Schutzabdeckung, die die Elemente umgibt und festhält und deren Öffnung die Blende (4) ist, wobei die Schutzabdeckung durch ein Sichtfenster (40) abgedichtet ist, das eine Funktion zur Formgebung der Feldstrahlen aufweisen kann, insbesondere eine Funktion zur Formgebung, die jener einer Schmidt-Platte gleich ist.

9. Abbildungssystem (1) nach Anspruch 8, **dadurch gekennzeichnet, dass** es eine Vorrichtung zur Kühlung oder Athermalisierung (31) der optischen Elemente des Abbildungssystems umfasst, wobei die Vorrichtung, die ein Kryostat sein kann, durch ein Sichtfenster optisch geöffnet ist, welches ebenfalls ihre Dichtheit sicherstellt, und die Schutzabdeckung ohne ihr Sichtfenster enthält.

10. Abbildungssystem (1) nach einem der vorstehenden Ansprüche, **dadurch gekennzeichnet, dass** eines der Diopter der Fresnel-Linse, vorzugsweise das Diopter, das dem Diopter, dem so genannten aktiven Diopter, dieser Linse vorgelagert ist, welche die Diskontinuitäten umfasst, um den Einfall der Feldstrahlen zu reduzieren und so die Schatteneffekte auf das aktive Diopter zu begrenzen, teilweise von einer lichtundurchlässigen Schicht bedeckt ist, um die Funktion der Blende (4) sicherzustellen.

11. Mehrweg-Abbildungssystem (50) nach einem der vorstehenden Ansprüche, **dadurch gekennzeichnet, dass** die Blende (4) eine Vielzahl von transparenten Teilen umfasst, wobei die Fresnel-Linse auf einer Platte (900) angeordnet ist, die eine Vielzahl von Fresnel-Linsen umfasst, wodurch eine Vielzahl von optischen Wegen gebildet wird, die sich jeweils auf einer Detektionsfläche (6) vereinigen, wobei jeder der optischen Wege eine Vorrichtung zur Feldbegrenzung umfasst, die es ermöglicht, die verschiedenen Wege optisch zu isolieren.

12. Mehrweg-Abbildungssystem (50) nach Anspruch 11, **dadurch gekennzeichnet, dass** die Anordnung der Elemente des Systems das Bilden und Kombinieren von Miniaturansichten ermöglicht, wobei eine Bildverarbeitungsvorrichtung die Nutzung der Miniaturansichten ermöglicht, sodass die Bildauflösung am Ausgang des Abbildungssystems erhöht wird.

13. Mehrweg-Abbildungssystem (50) nach einem der Ansprüche 11 oder 12, **dadurch gekennzeichnet, dass** Filtervorrichtungen in unterschiedlichen Spektralbändern so funktionieren, dass eine multispektrale Kamerafunktion ausgeführt wird.

14. Mehrweg-Abbildungssystem (50) nach einem der Ansprüche 11, 12 oder 13, **dadurch gekennzeichnet, dass** optische Wege verschiedene optische Richtungen anvisieren und dadurch, dass es eine Bildverarbeitungsvorrichtung umfasst, die geeignet ist, Miniaturansichten zu nutzen, sodass der Beobachtungsfeldwinkel des Abbildungssystems vergrößert wird.

15. Abbildungssystem nach einem der vorstehenden Ansprüche, **dadurch gekennzeichnet, dass** die Grenzfrequenz des Abbildungssystems höher ist als die Nyquist-Frequenz, die gleich ist dem Kehrwert des Doppelten des Abtastschritts des Detektors.

16. Abbildungsverfahren auf einem Detektor (600) mithilfe eine Fokussiervorrichtung (9), umfassend eine Platte (900), umfassend mindestens ein Fresnel-Diopter, welches das aktive Diopter der Fokussiervorrichtung mit einer Konstruktionswellenlänge λ₀ ist, die in dem Spektralband einer beobachteten Szene umfasst ist, wobei die Fokussiervorrichtung (9) einer Blende nachgelagert ist, wobei Feldstrahlen (7, 8) von einem beliebigen Punkt einer beobachteten Szene stammen, der in einer Distanz d₀ von der Blende entfernt ist, wobei das aktive Diopter eine Einheit von Diskontinuitäten umfasst, mit einer Brechzahl oder einem Dickenindex, deren Wirkung es ist, für die Konstruktionslänge λ₀ eine Beugungseffizienz von etwa 100 % bei einer Beugungsordnung p zu erzeugen, wobei die Phasen der Feldstrahlen, die auf Höhe dieser Diskontinuitäten ausgesendet werden, um eine ganze Zahl von Malen p2n versetzt sind, wobei das Abbildungsverfahren folgende Schritte umfasst:
▪ Berechnen der Distanz d_{I} zwischen der Blende und dem aktiven Diopter der Fokussiervorrichtung, wodurch die Astigmatismus-Aberration auf Höhe des Detektors minimiert wird;
**dadurch gekennzeichnet, dass** es folgende zusätzliche Schritte umfasst:
▪ Wählen einer optischen Leistung des aktiven Diopters der Fresnel-Linse, wobei das aktive Diopter den Großteil der optischen Leistung der Fokussiervorrichtung trägt, wobei diese optische Leistung von den Phasenkontinuitätszonen des aktiven Diopters geliefert wird, wobei die optische Leistung angepasst ist, um die Feldstrahlen auf dem Detektor zu fokussieren;
▪ Fokussieren der Feldstrahlen auf dem Detektor mittels des aktiven Diopters, der mit der Ordnung p für die Konstruktionswellenlänge konzipiert ist, wobei die Ordnung p größer oder gleich drei ist;
▪ Berechnen der kürzesten Distanz L₄ zwischen vier aufeinanderfolgenden Diskontinuitäten der Fresnel-Linse, und der Distanz d_{d} zwischen der Fokussiervorrichtung und dem Detektor, wobei die Distanz d_{d}, abhängig von der Distanz d₀, die Brennweite des aktiven Diopters ist;
▪ Verringern, falls nötig, der Öffnung L_{d} der Blende, die dem aktiven Diopter vorgelagert ist, sodass sie kleiner ist als L_{dmax} = L₄.d₀/(d₀ + d_{I}) um einerseits die maximale Anzahl von Phasendiskontinuitätszonen, die von den Feldstrahlen mit einem gegebenen Einfallswinkel beleuchtet werden, auf drei zu begrenzen, und andererseits eine lokale Korrektur von Aberrationen zu ermöglichen, angepasst an die Einfallswinkel der Feldstrahlen;
▪ wobei das aktive Diopter konzipiert ist, um die lokale Korrektur von Aberrationen auszuführen.

## Claims

1. System (1) for imaging field rays (7, 8) from any point of an observed scene, comprising:
- a detector (600);
- a diaphragm (4) positioned upstream from the detector and located at a distance d₀ from the any point of the observed scene; and
- a device (9) for focusing the field rays on the detector, the focusing device comprising an active dioptre comprising a set of discontinuities of refractive index or of thickness, the effect whereof is, for the design length λ₀, that of producing a diffraction efficiency near 100% at a diffraction order p, the phases of the field rays transmitted at the level of these discontinuities being offset by a whole number of times p2n, the focusing device being of design wavelength λ₀ comprised in the spectral band of the observed scene, the active dioptre of the focusing device being positioned between the diaphragm (4) and the detector (600):
o at a distance d_{I} from the diaphragm minimising the astigmatism aberration at the level of the detector;
o at a distance d_{d} from the detector, the distance d_{d}, dependent on the distance d₀, being the focal distance of said active dioptre;
the imaging system being **characterised in that**:
▪ the focusing device (9) comprises a blade (900) comprising at least one Fresnel dioptre which is the active dioptre of the focusing device and which carries most of the optical power of said focusing device, this optical power being supplied by the phase continuity zones of said active dioptre, said optical power being suitable for focusing the field rays on the detector,
▪ said active dioptre is designed at the order p for the design wavelength, the order p being greater than or equal to three;
▪ the aperture L_{d} of the diaphragm, positioned upstream from the active dioptre, is less than L_{dmax} = L₄.d₀/ (d₀ + d_{I}), where L₄ is the least distance between four consecutive discontinuities of the Fresnel lens, in order to, on one hand, limit to three the maximum number of phase discontinuity zones illuminated by said field rays of a given angle of incidence and, on the other, enable a local correction of aberrations, adapted to the angles of incidence of said field rays;
▪ said active dioptre is designed to perform said local aberration correction.

2. Imaging system (1) according to claim 1, **characterised in that** said active dioptre is designed at the order p, for the design wavelength, the order p being greater than 10.

3. Imaging system (1) according to any one of the preceding claims, **characterised in that** the focusing device (9) comprises, in series, several blades each comprising one or more Fresnel lenses.

4. Imaging system (1) according to any one of the preceding claims, **characterised in that** the detector (600) belongs to an optical detection assembly (6) which is a vacuum chamber optically opened by a port (5) which also ensures the tightness of the chamber, the port and the detector (600) being kept fixed in relation to one another, the respective optical axis thereof being merged.

5. Imaging system (1) according to any one of the preceding claims, **characterised in that** the detector (600) can detect the field rays in the infrared spectral range.

6. Imaging system (1) according to claim 5, **characterised in that** the detector (600) is a microbolometer in the case where the imaging system is uncooled.

7. Imaging system (1) according to any one of the preceding claims, **characterised in that** a filter (41) is disposed between the diaphragm and the detector (600), said filter (36) being suitable for being integrated in the blade (900) comprising said Fresnel lens.

8. Imaging system (1) according to any one of the preceding claims, **characterised in that** it comprises a device for holding (1000) all of the optical elements thereof, comprising a screen surrounding and holding said elements and the aperture whereof is said diaphragm (4), said screen being sealed by a port (40) suitable for having a function of shaping the field rays, particularly a shaping function equivalent to that of a Schmidt blade.

9. Imaging system (1) according to claim 8, **characterised in that** it comprises a cooling or athermalisation device (31) of the optical elements of said imaging system, said device, which may be a cryostat, being optically opened by a port also ensuring the tightness thereof, and containing said screen in the port thereof.

10. Imaging system (1) according to any one of the preceding claims, **characterised in that** one of the dioptres of said Fresnel lens, preferably the dioptre located upstream from the dioptre, said active dioptre, of this lens comprising said discontinuities in order to reduce the incidence of said field rays and thus limit the shading effects on the active dioptre, is partially coated with an opaque layer so as to carry out the function of said diaphragm (4).

11. Multichannel imaging system (50), according to any one of the preceding claims, **characterised in that** said diaphragm (4) comprises a plurality of transparent parts, said Fresnel lens being located on a blade (900) comprising a plurality of Fresnel lenses, forming a plurality of optical channels each coupled with a detection surface (6), each of the optical channels comprising a field limiting device suitable for optically isolating the different channels.

12. Multichannel imaging system (50), according to claim 11, **characterised in that** the arrangement of the elements of said system makes it possible to form and combine thumbnails, an image processing device enabling the processing of the thumbnails so as to increase the resolution of the image at the imaging system output.

13. Multichannel imaging system (50), according to one of claims 11 or 12, **characterised in that** filtering devices operate in different spectral bands so as to carry out a multispectral camera function.

14. Multichannel imaging system (50), according to one of claims 11, 12 or 13, **characterised in that** optical channels target different optical directions, and **in that** it comprises an image processing device suitable for processing thumbnails, so as to increase the observation field angle of said imaging system.

15. Imaging system according to any one of the preceding claims, **characterised in that** the cut-off frequency of the imaging system is greater than the Nyquist frequency equal to the inverse of double the sampling interval of the detector.

16. Method for imaging on a detector (600) using a focusing device (9) comprising a blade (900) comprising at least one Fresnel dioptre which is the active dioptre of the focusing device of design wavelength λ₀ comprised in the spectral band of an observed scene, the focusing device (9) being positioned downstream from a diaphragm, field rays (7, 8) from any point of an observed scene at a distance d₀ from the diaphragm, the active dioptre comprising a set of discontinuities of refractive index or of thickness, the effect whereof is, for the design length λ₀, that of producing a diffraction efficiency near 100% at a diffraction order p, the phases of the field rays transmitted at the level of these discontinuities being offset by a whole number of times p2n, the imaging method comprising the following steps:
▪ calculating the distance d_{I} between the diaphragm and the active dioptre of the focusing device suitable for minimising the astigmatism aberration at the level of the detector;
**characterised in that** it comprises the following additional steps:
▪ selecting an optical power of the active dioptre of the Fresnel lens, said active dioptre carrying most of the optical power of said focusing device, this optical power being supplied by the phase continuity zones of said active dioptre, said optical power being suitable for focusing the field rays on the detector;
▪ focusing the field rays on the detector, by means of said active dioptre designed at the order p for the design wavelength, the order p being greater than or equal to three;
▪ calculating the least distance L₄ between four consecutive discontinuities of the Fresnel lens, and the distance d_{d}, dependent on the distance d₀, being the focal distance of said active dioptre;
▪ reducing if required the aperture L_{d} of the diaphragm positioned upstream from the active dioptre, such that it is less than L_{dmax} = L₄.d₀/ (d₀ + d_{I}), in order to, on one hand, limit to three the maximum number of phase discontinuity zones illuminated by said field rays of a given angle of incidence and, on the other, enable a local correction of aberrations, adapted to the angles of incidence of said field rays;
▪ said active dioptre is designed to perform said local aberration correction.
